# EUROPÄISCHE PATENTSCHRIFT

(11) **EP 1 582 403 B1**
(45) Veröffentlichungstag und Bekanntmachung des Hinweises auf die Patenterteilung: **10.03.2010**
(21) Anmeldenummer: 04029942.2
(22) Anmeldetag: 17.12.2004
(51) Int. Cl.: B60N 3/10

(54) **Halteeinrichtung für einen Nahrungsmittel- bzw. Getränkebehälter**
Holding device for a food or beverage container
Dispositif de maintien pour récipient de nourriture ou boisson

(30) Priorität: 30.03.2004 DE 102004015341
(43) Veröffentlichungstag der Anmeldung: 05.10.2005
(73) Patentinhaber: Dr. Ing. h.c. F. Porsche Aktiengesellschaft, 70435 Stuttgart (DE)
(72) Erfinder: Schneider, Andreas, 72250 Freudenstadt (DE)

(56) Entgegenhaltungen:
- DE-A1- 19 514 154
- DE-A1- 19 717 011
- DE-U1- 29 822 840
- JP-A- 6 115 390
- JP-A- 2003 106 027

## Beschreibung

Bei der Erfindung wird ausgegangen von einer Halteeinrichtung für einen Nahrungsmittel - bzw. Getränkebehälter, gemäß 0berbegriff des Anspruchs 1.

Eine gattungsbildende, in Kraftfahrzeugen anordenbare Halteeinrichtung, die auch als Cupholder bezeichnet wird, ist aus der DE 195 14 154 A1 bekannt. Sie ist ausgestattet mit einem Gehäuse, einem an dem Gehäuse bewegbar angelenkten Halteelement, das in eine eingefahrene Ruhestellung in dem Gehäuse und in eine ausgefahrene Gebrauchsstellung verlagerbar ist. Ferner umfasst die Halteeinrichtung eine Blende, die an dem Halteelement fest angebracht ist und so eine Gehäuseöffnung in Abhängigkeit der Ruhe - und Gebrauchsstellung des Halteelements freigibt oder verschließt. Um das Halteelement in der Ruhestellung zu halten und in die Gebrauchsstellung freizugeben, umfasst die Halteeinrichtung außerdem eine Verriegelungs - und Freigabemechanik für das Halteelement, welche Mechanik ein erstes, am Gehäuse angeordnetes Teil und ein zweites, am Halteelement angeordnetes Teil aufweist. Das erste Teil ist als Steuerzapfen ausgeführt, der an einem dritten Teil der Mechanik, einem beweglich gelagerten Hebel, angeordnet ist. Der Steuerzapfen greift in eine als Herzkurve ausgebildete Steuerbahn ein, die das zweite Teil bildet und die am als linear bewegbarer Schlitten ausgeführten Halteelement angeordnet ist.

Der DE 298 22 840 U1 ist ein Aufbewahrungsfach zu entnehmen, das durch ein Gehäuse gebildet ist, dessen Gehäuseöffnung von einer schwenkbar am Gehäuse angelenkten Blende freigebbar und verschließbar ist. Die Blende ist in Öffnungsrichtung mit einer Öffnungskraft beaufschlagt. Außerdem ist für die Blende eine Verriegelungs - und Freigabemechanik vorgesehen, die eine Herzkurvesteuerung aufweist.

Aus der JP 06-115 390 A ist ebenso eine Halteeinrichtung mit schwenkbeweglicher Blende bekannt.

Aufgabe der Erfindung ist es, eine Halteeinrichtung der eingangs genannten Art anzugeben, die eine komfortable Handhabung ermöglicht.

Gelöst wird diese Aufgabe mit einer Halteeinrichtung, die die in Anspruch 1 angeführten Merkmale aufweist. Weitere Ausgestaltungen der Erfindung sind den Unteransprüchen zu entnehmen.

Die mit der Erfindung gemäß Anspruch 1 hauptsächlich erzielten Vorteile sind folgende: Durch den beweglichen Hebel mit dem Sperrfortsatz für die Blende wird diese so lange in ihrer Öffnungsstellung gehalten, bis der Haltearm aus seiner Gebrauchsstellung vollständig in die Ruhestellung manuell verlagert ist und durch die Verriegelungs - und Freigabemechanik in der Ruhestellung gehalten ist. Nachfolgend schließt sich die Blende automatisch durch die an ihr angreifende Schließkraft.

Nach einer Weiterbildung mit den in Anspruch 4 genannten Merkmalen wird das Halteelement über die überdrückbare Blende von der Verriegelungsmechanik freigegeben. Dadurch dass, das die auf das Halteelement wirkende Öffnungskraft, beispielsweise Federkraft, größer als die Schließkraft für die Blende ist, wird das Halteelement aus seiner Ruhestellung in die Gebrauchsstellung bewegt und drängt dabei die Blende in ihre Öffnungsstellung, in der sie dann von dem Sperrfortsatz gehalten wird.

Gemäß einem in Anspruch 9 angegebenen Ausführungsbeispiel wird in vorteilhafter Weise ein verzögertes bzw. gedämpftes Schließen der Blende erreicht, so dass einerseits durch das gedämpfte Nachlaufen der Blende ein hochwertiges Erscheinungsbild erzielbar ist und andererseits durch das verzögerte Schließen das Halteelement komfortabel in seine Ruhestellung manuell eingefahren werden kann, da die Blende auch nach dem Freigeben durch den Sperrfortsatz noch für eine gewisse Zeitdauer in Öffnungsstellung verbleibt.

Die Erfindung wird nachfolgend anhand von Ausführungsbeispielen mit Bezug auf die Zeichnung näher erläutert. Es zeigen:
- Fig. 1: eine Halteeinrichtung für einen Getränke - bzw. Nahrungsmittelbehälter in einer Draufsicht und
- Fig. 2: die Halteeinrichtung in einer perspektivischen Seitenansicht.

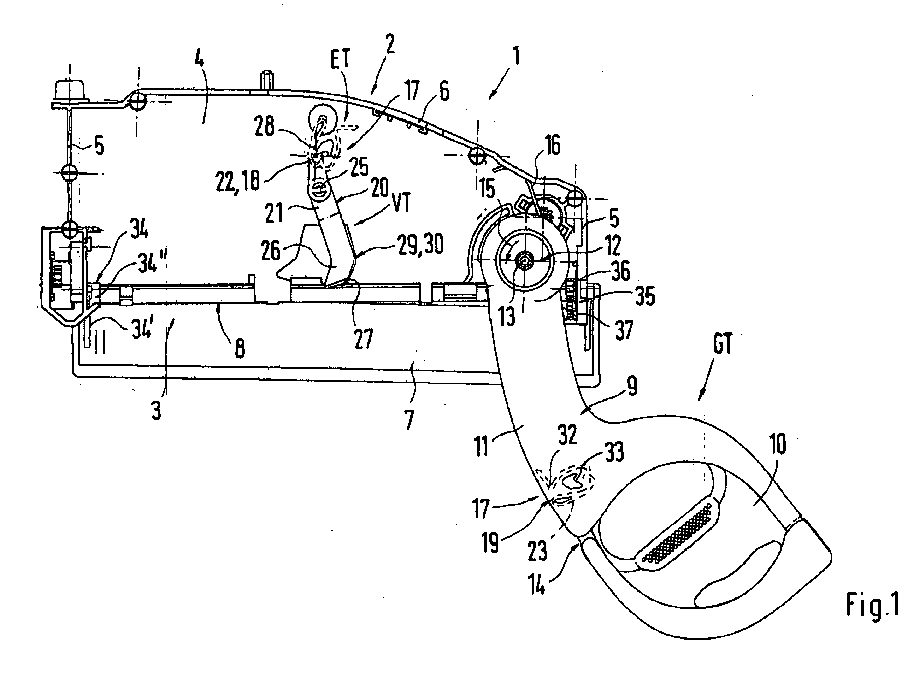

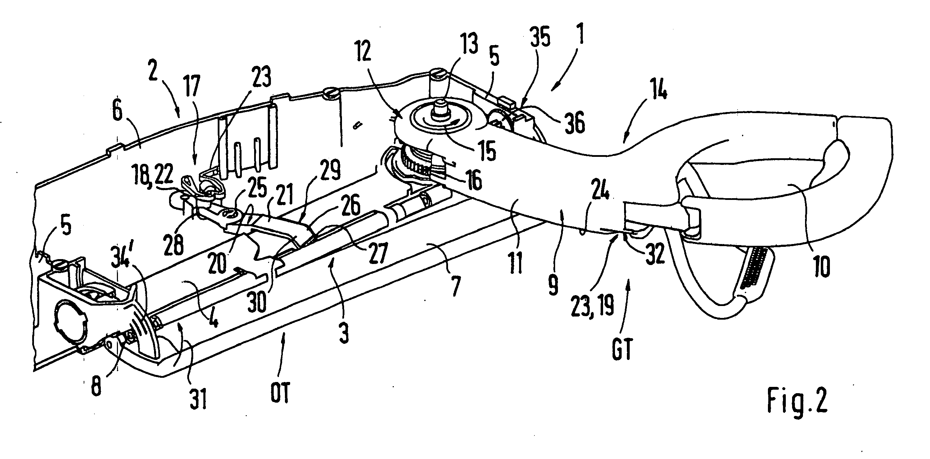

Anhand der Fig. 1 und 2 wird eine Halteeinrichtung 1 für einen Behälter für ein Nahrungsmittel und/oder Getränk beschrieben, die als Innenausstattungsteil eines hier nicht dargestellten Kraftfahrzeugs, insbesondere Personenwagens, in dessen Innenraum beispielsweise in einer Schalt - bzw. Instrumententafel eingesetzt sein kann.

Die Halteeinrichtung 1 besitzt ein Gehäuse 2, das bis auf eine Gehäuseöffnung 3 allseitig geschlossen sein kann. In den Fig. 1 und 2 sind ein Gehäuseboden 4, Seitenwände 5 und eine Rückwand 6 des Gehäuses 2 gezeigt, wobei ein Gehäusedeckel nicht dargestellt ist, grundsätzlich jedoch vorgesehen sein kann. Die Gehäuseöffnung 3 wird somit begrenzt von den Rändern des Gehäusebodens 4, der Seitenwände 5 und ggf. des Gehäusedeckels. An dem Gehäuse 2 ist eine Blende 7 in einer Schwenkachse 8 angelenkt und verschließt in einer hier nicht gezeigten Schließstellung die Gehäuseöffnung 3. In einer in den Fig. 1 und 2 dargestellten Offenstellung OT ist die Gehäuseöffnung 3 von der Blende 7 freigegeben, die um ihre Schwenkachse 8 in die etwa horizontale Offenstellung OT verschwenkt ist. Im Ausführungsbeispiel ist die Blende 7 über die Schwenkachse 8 entlang ihrer Breite am Gehäuseboden 4 befestigt.

An dem Gehäuse 2 ist ferner ein Halteelement 9 bewegbar derart angelenkt, dass es eine innerhalb des Gehäuses 2 liegende eingefahrene Ruhestellung (nicht dargestellt) einnehmen kann, in der es vollständig von dem Gehäuse 2 aufgenommen ist und die Blende ihre Schließstellung einnehmen kann. Das Halteelement 9 kann ferner in ein ausgefahrene Gebrauchsstellung GT überführt werden, die in den Fig. 1 und 2 gezeigt ist, in welcher Gebrauchsstellung GT zumindest ein an dem Halteelement 9 ausgebildetes Aufnahmemittel 10 für den Behälter aus dem Gehäuse 2 heraus ragt. Das Halteelement 9 kann als Arm 11 ausgeführt sein, dessen eines Ende 12 an dem Gehäuse 2 in einer Schwenkachse 13 gehalten ist und dessen anderes Ende 14 das als Umschließungselement ausgeführte Aufnahmemittel 10 trägt. In der Gebrauchsstellung GT des Halteelements 9 ist die Blende 7 in ihrer Offenstellung OT und gibt die Gehäuseöffnung 3 frei, und in der Ruhestellung des Halteelements 9 ist die Blende 7 in Schließstellung und verschließt die Gehäuseöffnung 3, so dass die Blende 7 in Abhängigkeit der Stellung des Halteelements 9 bewegt wird.

In der Ruhestellung innerhalb des Gehäuses 2 ist das Halteelement 9 in Richtung seiner Gebrauchsstellung GT mit einer Ausfahrkraft beaufschlagt, die als Pfeil 15 um die Schwenkachse 13 eingezeichnet ist und die insbesondere von einer Feder 16 aufgebracht wird, die als Schenkelfeder realisiert und um die Schwenkachse 13 gelegt sein kann und sich dabei einerseits an dem Gehäuse 2 und andererseits an dem Halteelement 9 abstützt. In der Ruhestellung wird das Halteelement 9 innerhalb des Gehäuses 2 über eine Verriegelungs - und Freigabemechanik 17 rastend gehalten und davon freigegeben, um um die Schwenkachse mit der Ausfahrkraft (Pfeil 15) die Gebrauchsstellung GT einnehmen zu können. Die nachfolgend lediglich als Mechanik 17 bezeichnete Verriegelungs - und Freigabemechanik für das Halteelement 9 umfasst mehrere Teile, zumindest ein erstes Teil 18, ein zweites Teil 19 und drittes Teil 20. Das erste Teil 18 ist am Gehäuse 2, insbesondere am Gehäuseboden 4, und das zweite Teil 19 ist am Halteelement 9 angeordnet. Das dritte Teil 20 ist als am Gehäuse 2, insbesondere Gehäuseboden 4, bewegbar gehaltener Hebel 21 ausgeführt, der das erste Teil 18 trägt. Die Mechanik 17 ist als so genannte Push - Push - Kinematik ausgeführt und bevorzugt als Kurvensteuerung realisiert, die einen Steuerzapfen 22 und eine Steuerbahn 23 bzw. Steuerkurve aufweist. Der Steuerzapfen 22 bildet das erste Teil 18 und die Steuerbahn 23 das zweite Teil 19 der Mechanik 17. In dieser Ausführungsform ist der Steuerzapfen 22 an dem beweglich gelagerter Hebel 21 und die Steuerbahn 23 an dem Halteelement 9, insbesondere an dessen Unterseite 24, angeordnet, da der Hebel 21 im Ausführungsbeispiel am Gehäuseboden 4 angelenkt ist, so dass beiden Teile 18 und 19 miteinander in Eingriff gebracht werden können, wodurch der Hebel 21 in Abhängigkeit des Verlaufs der Steuerbahn 23 bewegt, insbesondere um eine Schwenkachse 25 geschwenkt wird. Es wird deutlich, dass in einem anderen, hier nicht gezeigten Ausführungsbeispiel die Steuerbahn 23 an dem Hebel 21 und der Steuerzapfen 22 an dem Halteelement 9 angeordnet werden könnten. Der Hebel 21 trägt mithin entweder des erste oder zweite Teil 18 bzw. 19 und das Halteelement 9 ist demgemäß mit dem zweiten oder ersten Teil 19 bzw. 18 ausgestattet.

An dem Hebel 21 ist zusätzlich noch ein Fortsatz ausgebildet, der an der Blende 7 angreift, wenn diese in ihrer Offenstellung 0T vorliegt und die Bewegung der Blende 7 sperrt, so dass diese in der Offenstellung 0T gehalten ist. Der Fortsatz wird daher nachfolgend als Sperrfortsatz 26 bezeichnet, der an der Blende 7 benachbart zu deren Schwenkachse 8 angreift. Der Hebel 21 weist an seinem ersten Hebelende 27 den Sperrfortsatz 26 und an seinem zweiten Hebelende 28 das erste Teil 18, hier den Steuerzapfen 22, auf, und zwischen den beiden Enden 27 und 28 liegt die Schwenkachse 25, so dass der Sperrfortsatz 26 in Abhängigkeit der Mechanik 17 bzw. des Verlaufs der Steuerbahn 23 in den Bereich der Blende 7 eingeschwenkt oder außer Eingriff mit der Blende 7 gebracht wird. Der Sperrfortsatz 26 ist an seinem freien Ende abgeschrägt und weist überdies in seinem Verbindungsbereich 29 zum Hebel 21 eine Abwinklung 30 in zwei Ebenen auf, so dass der Sperrfortsatz 26 unter jeweils einem Winkel zum Gehäuseboden 4 und zur Seitenwand 5 verläuft.

Die Blende 7 ist in ihrer 0ffenstellung 0T mit einer in Richtung ihrer Schließstellung wirkenden Schließkraft (Pfeil 31) beaufschlagt, die die Blende 7 schließt, wenn der Sperrfortsatz 26 unwirksam, also außer Eingriff mit der Blende 7 gebracht ist. Vorzugsweise nimmt der Hebel 21 eine Vorzugsstellung VT ein, die beispielsweise durch Federkraft eingestellt wird, so dass der Hebel 21 die Vorzugsstellung VT einnimmt, wenn die Steuerbahn 23 und der Steuerzapfen 22 nicht in Eingriff miteinander sind, was der Fall ist, wenn das Halteelement 9 seine Ruhestellung verlässt und in die Gebrauchsstellung GT verlagert wird. Die Vorzugsstellung VT entspricht mithin einer Sperrstellung, in der die Blende 7 in Offenstellung OT gehalten ist. Wird das Halteelement 9 von der Gebrauchsstellung GT in die Ruhestellung verlagert, trifft ein Einleitungsabschnitt 32 der Steuerbahn 23 auf den Steuerzapfen 22, so dass dieser in der Steuerbahn 23 weiter geführt wird, wodurch der Hebel 21 entsprechend dem Verlauf der Steuerbahn 23, die vorzugsweise eine so genannte Herzkurve mit einer Rastkerbe 33 darstellt, verschwenkt wird und der Steuerzapfen 22 in einer Endstellung ET der Mechanik in der Rastkerbe 33 zu liegen kommt, in der der Sperrfortsatz 26 weggeschwenkt ist und die Schließkraft (Pfeil 31) die Blende 7 automatisch von der Offenstellung OT in die Schließstellung verlagert, so dass die Gehäuseöffnung 3 verschlossen ist. Die Endstellung ET der Mechanik 17 ist in Fig. 1 durch die gestrichelt und in Fig. 2 mit durchgehender Linie eingezeichnete Steuerbahn 23 dargestellt.

Um den Öffnungswinkel der Blende 7 in der 0ffenstellung 0T zu begrenzen, ist ein Begrenzungseinrichtung 34 vorgesehen, die als Fanglasche 34' ausgeführt sein kann, die an der Blende 7 befestigt und am Gehäuse 2 gegen einen Begrenzungsanschlag 34" trifft.

Im gezeigten Ausführungsbeispiel erfolgt das Schließen der Blende 7 über die von einer entsprechenden nicht dargestellten Federeinrichtung, beispielsweise zumindest eine um die Schwenkachse 8 gelegt Schenkelfeder, aufgebrachten Schließkraft (Pfeil 31) gedämpft bzw. verzögert, wofür eine gegen die Schließkraft wirkende Bremse 35 vorgesehen ist, die auf die Blende 7 wirkt. Die Bremse 35 ist als so genannte Softbremse ausgeführt, die ein langsames Schließen der Blende 7 ermöglicht. Die Bremse 35 weist als Bremselement einen abbremsbaren Rotor (nicht dargestellt) auf, der über ein Zahnrad 36 angetrieben wird, welches Zahnrad 36 mit einem an der Blende 7 angeordneten Zahnradsegment 37 kämmt.

Soll das Halteelement 9 bei geschlossener Blende 7 aus seiner Ruhestellung in die Gebrauchsstellung GT überführt werden, wird zunächst die Blende 7 entgegen der Schließkraft (Pfeil 31) geöffnet und durch Überdrücken des Halteelements 9 über die Ruhelage hinaus die Mechanik 17 angesteuert, so dass die Verriegelung für das Halteelement 9 aufgehoben wird. Im Ausführungsbeispiel wird dazu der Steuerzapfen 22 aus der Rastkerbe 33 heraus bewegt und durch die Feder 16 wird das Halteelement 9 in seine Gebrauchslage GT verschwenkt, wodurch die Steuerbahn 23 vollständig außer Eingriff mit dem Steuerzapfen 22 kommt und der Hebel 21 in die Vorzugsstellung VT verschwenkt wird.

Nach einem bevorzugten Ausführungsbeispiel kann die Blende 7 in ihrer Schließstellung weiter in Richtung des Pfeils 31 manuell gedrückt werden, wodurch sie auf das in Ruhestellung befindliche Halteelement 9 wirkt, wodurch dieses - wie oben beschrieben - überdrückt wird, wodurch die Mechanik 17 entriegelt und das Halteelement 9 freigegeben wird, um in die Gebrauchsstellung GT durch die Feder 16 bewegt zu werden. Die von der Feder 16 aufgebrachte Ausfahrkraft (Pfeil 15) ist dabei größer als die von der Federeinrichtung bereitgestellte Schließkraft (Pfeil 31), so dass das Halteelement 9 die Blende 7 in die Offenstellung OT mitnimmt, in der sie dann - wie zuvor beschrieben - von dem Hebel 21 bzw. dessen Sperrfortsatz 26 gehalten wird.

## Patentansprüche

1. Halteeinrichtung (1) für einen Nahrungsmittel - bzw. Getränkebehälter in einem Kraftfahrzeug, mit einem Gehäuse (2), einem an dem Gehäuse bewegbar angelenkten, in eine eingefahrene Ruhestellung und eine ausgefahrene Gebrauchsstellung verlagerbaren Halteelement (9) für den Behälter, einer Blende (7), die eine Gehäuseöffnung in Abhängigkeit der Ruhe - und Gebrauchsstellung des Halteelements freigibt oder verschließt, und mit einer Verriegelungs - und Freigabemechanik (17) für das Halteelement, welche Mechanik ein erstes, am Gehäuse angeordnetes Teil (18) und zweites, am Halteelement angeordnetes Teil (19) aufweist, von denen eines als Steuerbahn (23) und ein anderes als in die Steuerbahn eingreifender Steuerzapfen (22) ausgebildet ist, und welche Mechanik ein drittes Teil (20) aufweist, das als am Gehäuse beweglich gelagerter Hebel (21) ausgeführt ist, an dem das erste oder zweite Teil angeordnet ist, **dadurch gekennzeichnet, dass** die Blende (7) in einer Schwenkachse (8) beweglich an dem Gehäuse (2) gelagert ist, dass die Blende (7) in ihrer die Gehäuseöffnung (3) freigebenden Offenstellung (OT) in Richtung ihrer die Gehäuseöffnung (3) verschließenden Schließstellung mit einer Schließkraft (Pfeil 31) beaufschlagt ist und dass der beweglich am Gehäuse (2) gelagerte Hebel (21) einen Sperrfortsatz (26) aufweist, der die Blende (7) in der Offenstellung (OT) hält, bis das Halteelement (9) aus der gebrauchslage (GT) in die Ruhelage verlagert ist.

2. Halteeinrichtung nach Anspruch 1, **dadurch gekennzeichnet, dass** der Hebel (21) schwenkbar an dem Gehäuse (2) gelagert ist.

3. Halteeinrichtung nach Anspruch 1, **dadurch gekennzeichnet, dass** die Verriegelungs - und Freigabemechanik (17) als so genannte Push - Push - Kinematik ausgebildet ist.

4. Halteeinrichtung nach Anspruch 3, **dadurch gekennzeichnet, dass** die Blende (7) in ihrer Schließstellung weiter in Schließrichtung betätigbar, also überdrückbar ist, und so das Halteelement (9) durch die Push - Push - Kinematik (Mechanik 17) freigebbar ist, und dass das Halteelement (9) aus seiner Ruhestellung in Richtung seiner Gebrauchsstellung (GT) mit einer Ausfahrkraft (Pfeil 15) beaufschlagt ist, die größer ist als die Schließkraft (Pfeil 31) für die Blende (7).

5. Halteeinrichtung nach Anspruch 1, 3 oder 4, **dadurch gekennzeichnet, dass** die Steuerbahn (23) der Verriegelungs - und Freigabemechanik (17) als Herzkurvensteuerung ausgeführt ist.

6. Halteeinrichtung nach einem der vorhergehenden Ansprüche, **dadurch gekennzeichnet, dass** die Steuerbahn (23) an dem Halteelement (9) und der Steuerzapfen (22) an dem Hebel (21) angeordnet ist.

7. Halteeinrichtung nach Anspruch 1 und 2, **dadurch gekennzeichnet, dass** der Sperrfortsatz (26) an einem ersten Hebelende (27) und das erste Teil (18) der Verriegelungs - und Freigabemechanik (17) an einem zweiten Hebelende (28) angeordnet ist, und dass die Schwenkachse (25) am Hebel (21) zwischen dem ersten und zweiten Hebelende (27, 28) angreift.

8. Halteeinrichtung nach Anspruch 1, **dadurch gekennzeichnet, dass** das Halteelement (9) schwenkbar an dem Gehäuse (2) angelenkt ist.

9. Halteeinrichtung nach Anspruch 1, **dadurch gekennzeichnet, dass** die mit der Schließkraft (Pfeil 31) beaufschlagte Blende (7) an einer gegen die Schließkraft (Pfeil 31) wirkenden Bremse (35) abgestützt ist, die ein verzögertes und/oder gedämpftes Bewegen der Blende (7) von der Offenstellung (OT) in die Schließstellung bewirkt.

## Claims

1. Holding device (1) for a food or beverage container in a motor vehicle, with a housing (2), with a container holding element (9) articulated movably on the housing and displaceable into a retracted position of rest and an extended position of use, with a lid (7) which opens or closes a housing orifice as a function of the position of rest and position of use of the holding element, and with a locking and release mechanism (17) for the holding element, which mechanism has a first part (18) arranged on the housing and a second part (19) arranged at the holding element, of which parts one is designed as a control track (23) and another as a control pin (22) engaging into the control track, and which mechanism has a third part (20) which is designed as a lever (21) which is mounted movably on the housing and on which the first or second part is arranged, **characterized in that** the lid (7) is mounted on the housing (2) movably along a pivot axis (8), **in that** the lid (7), in its open position (OT) opening the housing orifice (3), is acted upon with a closing force (arrow 31) in the direction of its closing position closing the housing orifice (3), and **in that** the lever (21) mounted movably on the housing (2) has a blocking extension (26) which holds the lid (7) in the open position (OT) until the holding element (9) is displaced out of the position of use (GT) into the position of rest.

2. Holding device according to Claim 1, **characterized in that** the lever (21) is mounted pivotably on the housing (2).

3. Holding device according to Claim 1, **characterized in that** the locking and release mechanism (17) is designed as what is known as push/push kinematics.

4. Holding device according to Claim 3, **characterized in that** the lid (7), in its closing position, can be actuated further, that is to say overpressed, in the closing direction, and the holding element (9) can thus be released by means of the push/push kinematics (mechanism 17), and **in that** the holding element (9) is acted upon out of its position of rest in the direction of its position of use (GT) with an extending force (arrow 15) which is higher than the closing force (arrow 31) for the lid (7).

5. Holding device according to Claim 1, 3 or 4, **characterized in that** the control track (23) of the locking and release mechanism (17) is designed as a cardioid control.

6. Holding device according to one of the preceding claims, **characterized in that** the control track (23) is arranged on the holding element (9) and the control pin (22) is arranged on the lever (21).

7. Holding device according to Claims 1 and 2,
**characterized in that** the blocking extension (26) is arranged on a first lever end (27) and the first part (18) of the locking and release mechanism (17) is arranged on a second lever end (28), and **in that** the pivot axis (25) engages on the lever (21) between the first and the second lever end (27, 28).

8. Holding device according to Claim 1, **characterized in that** the holding element (9) is articulated pivotably on the housing (2).

9. Holding device according to Claim 1, **characterized in that** the lid (7) acted upon with the closing force (arrow 31) is supported on a brake (35) which acts counter to the closing force (arrow 31) and which causes a decelerated and/or damped movement of the lid (7) from the open position (OT) into the closing position.

## Revendications

1. Dispositif de maintien (1) pour un récipient de nourriture et/ou de boisson dans un véhicule automobile, comprenant un boîtier (2), un élément de maintien (9) pour le récipient, articulé de manière mobile au boîtier, pouvant être déplacé dans une position de repos rentrée et une position d'utilisation sortie, un bandeau (7), qui libère ou ferme une ouverture du boîtier en fonction de la position de repos ou d'utilisation de l'élément de maintien, et un mécanisme de verrouillage et de libération (17) pour l'élément de maintien, lequel mécanisme présente une première partie (18) disposée sur le boîtier et une deuxième partie (19) disposée sur l'élément de maintien, dont l'une est réalisée sous forme de piste de commande (23) et l'autre est réalisée sous forme de tourillon de commande (22) venant en prise dans la piste de commande, et lequel mécanisme présente une troisième partie (20), qui est réalisée sous forme de levier (21) monté mobile sur le boîtier, sur lequel est disposée la première ou la deuxième partie, **caractérisé en ce que** le bandeau (7) est monté sur le boîtier (2) de manière mobile dans un axe de pivotement (8), **en ce que** le bandeau (7) est sollicité par une force de fermeture (flèche 31) dans sa position d'ouverture (OT) libérant l'ouverture du boîtier (3) dans la direction de sa position de fermeture fermant l'ouverture de boîtier (3) et **en ce que** le levier (21) monté mobile sur le boîtier (2) présente une saillie de blocage (26) qui maintient le bandeau (7) dans la position d'ouverture (OT) jusqu'à ce que l'élément de maintien (9) soit déplacé de la position d'utilisation (GT) dans la position de repos.

2. Dispositif de maintien selon la revendication 1, **caractérisé en ce que** le levier (21) est monté de manière pivotante sur le boîtier (2).

3. Dispositif de maintien selon la revendication 1, **caractérisé en ce que** le mécanisme de verrouillage et de libération (17) est réalisé sous forme de cinématique dite push-push (pousser-pousser).

4. Dispositif de maintien selon la revendication 3, **caractérisé en ce que** le bandeau (7) peut être commandé dans sa position de fermeture à nouveau dans la direction de fermeture, c'est-à-dire peut être poussé davantage, et ainsi l'élément de maintien (9) peut être libéré par la cinématique push-push (mécanisme 17), et **en ce que** l'élément de maintien (9) est sollicité de sa position de repos dans la direction de sa position d'utilisation (GT), avec une force de sortie (flèche 15) qui est supérieure à la force de fermeture (flèche 31) pour le bandeau (7).

5. Dispositif de maintien selon la revendication 1, 3 ou 4, **caractérisé en ce que** la piste de commande (23) du mécanisme de verrouillage et de libération (17) est réalisée sous forme de commande de came en coeur.

6. Dispositif de maintien selon l'une quelconque des revendications précédentes, **caractérisé en ce que** la piste de commande (23) est disposée sur l'élément de maintien (9) et le tourillon de commande (22) est disposé sur le levier (21).

7. Dispositif de maintien selon les revendications 1 et 2, **caractérisé en ce que** la saillie de blocage (26) est disposée sur une première extrémité de levier (27) et la première partie (18) du mécanisme de verrouillage et de libération (17) est disposée sur une deuxième extrémité de levier (28), et **en ce que** l'axe de pivotement (25) vient en prise sur le levier (21) entre la première et la deuxième extrémité de levier (27, 28).

8. Dispositif de maintien selon la revendication 1, **caractérisé en ce que** l'élément de maintien (9) est articulé de manière pivotante au boîtier (2).

9. Dispositif de maintien selon la revendication 1, **caractérisé en ce que** le bandeau (7) sollicité par la force de fermeture (flèche 31) est supporté sur un frein (35) agissant à l'encontre de la force de fermeture (flèche 31), qui provoque un déplacement ralenti et/ou amorti du bandeau (7) de la position d'ouverture (OT) dans la position de fermeture.
